# EUROPEAN PATENT SPECIFICATION

(11) **EP 1 383 197 B1**
(45) Date of publication and mention of the grant of the patent: **06.05.2009**
(21) Application number: 02713247.1
(22) Date of filing: 28.03.2002
(51) Int. Cl.: H01M 10/40, H01M 10/04

(54) **SECONDARY BATTERY MANUFACTURING METHOD AND MANUFACTURING DEVICE**
VERFAHREN ZUR HERSTELLUNG EINER SEKUNDÄRBATTERIE UND DERER HERSTELLUNGSEINRICHTUNG
PROCEDE DE FABRICATION D'UNE BATTERIE SECONDAIRE ET DISPOSITIF DE FABRICATION D'UNE TELLE BATTERIE

(30) Priority: 30.03.2001 JP 2001098218
(43) Date of publication of application: 21.01.2004
(73) Proprietor: TORAY ENGINEERING CO., LTD., Osaka-shi, Osaka 530-0005 (JP)
(72) Inventor: KURIMOTO, Yasuo, Otsu-shi, Shiga 520-0865 (JP); FURUICHI, Ryoichi, Otsu-shi, Shiga 520-0843 (JP)
(74) Representative: Hauck Patent- und Rechtsanwälte
(86) International application number: PCT/JP2002/003136
(87) International publication number: WO 2002/080300

(56) References cited:
- EP-A- 0 961 335
- EP-A1- 0 994 521
- EP-A1- 1 041 658
- EP-A1- 1 056 142
- WO-A-96/20504
- JP-A- 7 326 344
- JP-A- 10 302 843

## Description

### TECHNICAL FIELD

This invention relates to a a second battery manufacturing method and a secondary battery manufacturing apparatus for manufacturing the battery.

### BACKGROUND ART

In recent years, small size and lightness, large capacity and high voltage features have been required of power sources for portable telephones, television cameras, notebook computers and the like. Secondary batteries such as lithium ion polymer batteries and lithium batteries, for example, have been used.

Electrodes of lithium ion polymer batteries, among the secondary batteries, are manufactured by a process as described in "Japanese Unexamined Patent Publication H11-339785". Positive electrodes and negative electrodes for polymer batteries are manufactured first. Subsequently, with a plurality of positive electrodes and negative electrodes laminated, an electrolyte in form of a solution is poured into a collector, and then heat treatment is carried out in a drying oven to harden the electrolyte.

The above electrodes are manufactured through a film forming step for forming individually a positive electrode material film, a negative electrode material film and a separator film in roll form by coating a positive electrode material, a negative electrode material and a separator on a carrier material, respectively, and rolling them up, a step of forming individually a positive electrode material film, a negative electrode material film and a separator film in roll form by cutting each of the positive electrode material film, negative electrode material film and separator film in roll form to a predetermined width, a collector lamination step of positive electrode and negative electrode for forming a positive electrode film and a negative electrode film individually by applying and laminating the positive material film and negative electrode material film cut to the predetermined width with the collector in between to/on both surfaces of the above collector, a separator-attached negative electrode film forming step for applying the separator film on both surfaces of the laminated negative electrode film, a punching step for punching, with a die, collecting portions at opposite edges of each of the positive electrode film and the negative electrode film with the separator to a predetermined shape, a positive electrode film half cutting step for half-cutting only of the positive electrode film on the carrier material with a die, a transfer step for transferring the half-cut positive electrode film to predetermined positions at fixed intervals on both surfaces of the negative electrode film with the separator, a laminating step for laminating the transferred positive electrode film and the negative electrode film with the separator, and a step of punching, with a die, the laminated assembly of the transferred positive electrode film and the negative electrode film with the separator to individual electrodes.

With the above electrode manufacturing apparatus, electrodes are manufactured through the nine steps. Subsequently, in the method of manufacturing predetermined lithium ion polymer batteries, with a plurality of electrodes laminated, an electrolyte in form of a solution is poured into the collector, and then heat treatment is carried out in a drying oven to harden the electrolyte. This involves many manufacturing steps, and a device corresponding to each step must be installed. Thus, the entire manufacturing apparatus is large and each device control is complicated. The many steps pose a problem of lowering productivity.

It is extremely difficult to pour an electrolyte in solution form uniformly into the laminated collector. The electrolyte poured forms patches, and gas generated in time of hardening the electrolyte remains and forms bubbles, resulting in a problem of defective products.

Having regard to the state of the art noted above, the object of this invention is to provide a secondary battery manufacturing method and a secondary battery manufacturing apparatus capable of preventing defecting products from being caused by patches formed by an electrolyte poured, bubbles or the like, and moreover drastically decreasing processing steps to improve productivity drastically.

### DISCLOSURE OF THE INVENTION

A secondary battery manufacturing method according to this invention is characterized by comprising a step of delivering a positive electrode sheet, a first coating step for intermittently applying an electrolyte-containing solution or an electrolytic gel to both surfaces of the positive electrode sheet, a first heating step for heating the electrolyte-containing solution or electrolytic gel applied to both surfaces of the positive electrode sheet to fix an electrolyte thereto, a step of delivering a negative electrode sheet, a second coating step for intermittently applying an electrolyte-containing solution or an electrolytic gel to both surfaces of the negative electrode sheet, a second heating step for heating the electrolyte-containing solution or electrolytic gel applied to both surfaces of the negative electrode sheet to fix an electrolyte thereto, and a winding step for winding, into a predetermined form, the positive electrode sheet with the electrolyte fixed thereto and the negative electrode sheet with the electrolyte fixed thereto, with a separator disposed therebetween to produce an insulated state, and the winding step is executed such that, of two core shafts rotatably attached to a turret member rotatably supported by an apparatus base, one is in a winding position and the other in a takeout position, the core shaft located in the winding position in this state winding a laminate of said positive electrode sheet, negative electrode sheet and separator successively into a predetermined form, said turret member being rotated, when the laminate becomes the predetermined form, to move the core shaft located in the winding position to the takeout position and move the core shaft located in the takeout position to the winding position, the laminate wound on the core shaft having moved from the winding position to the takeout position being taken out, and the laminate being again wound from the core shaft having moved from the takeout position to the winding position. By executing the winding step as noted above, the switching between winding and takeout and the winding operation may be carried out continuously.

According to the secondary battery manufacturing method of this invention, since a secondary battery is manufactured through the above steps, defecting products are prevented from being caused by patches formed by the electrolyte poured, bubbles or the like. Further, this method can drastically decrease processing steps to improve productivity drastically.

A secondary battery manufacturing apparatus according to this invention is characterized by comprising a positive electrode sheet delivery mechanism for delivering a positive electrode sheet, a first coating mechanism for intermittently applying an electrolyte-containing solution or an electrolytic gel to both surfaces of the positive electrode sheet, a first heating mechanism for heating the electrolyte-containing solution or electrolytic gel applied to both surfaces of the positive electrode sheet to fix an electrolyte thereto, a negative electrode sheet delivery mechanism for delivering a negative electrode sheet, a second coating mechanism for intermittently applying an electrolyte-containing solution or an electrolytic gel to both surfaces of the negative electrode sheet, a second heating mechanism for heating the electrolyte-containing solution or electrolytic gel applied to both surfaces of the negative electrode sheet to fix an electrolyte thereto, a separator delivery mechanism for supplying a separator for laminating, in an insulated state, the positive electrode sheet with the electrolyte fixed thereto and the negative electrode sheet with the electrolyte fixed thereto, and a winding mechanism for winding, into a predetermined form, the positive electrode sheet with the electrolyte fixed thereto, the negative electrode sheet with the electrolyte fixed thereto and the separator in a laminated state, and the winding mechanism includes a turret member rotatably supported by an apparatus base, and core shafts rotatably attached to the turret member, the core shafts being installed in at least two positions including a position for winding a laminate of the positive electrode sheet, negative electrode sheet and separator successively into a predetermined form, and a position for taking out a secondary battery which is the laminate wound. With the winding mechanism having the turret member and core shafts as noted above, the turret member is rotated in time of switching between winding and takeout to move the core shaft in the winding position to the takeout position, and the core shaft in the takeout position to the winding position, to carry out the switching operation and winding operation continuously. Where output is small, the secondary battery manufacturing apparatus according to this invention may have a core shaft installed in one location.

According to the secondary battery manufacturing apparatus of this invention, the construction having the above mechanisms can efficiently and reliably manufacture products free from patches formed by the electrolyte poured, and bubbles formed in time of hardening. Further, a decrease in the processing steps allows the entire manufacturing apparatus to have a compact construction.

In the secondary battery manufacturing apparatus according to this invention, preferably, tab attaching mechanisms are installed respectively between the positive electrode sheet delivering mechanism and the first coating mechanism or between the first heating mechanism and the winding mechanism, and between the negative electrode sheet delivery mechanism and the second coating mechanism or between the second heating mechanism and the winding mechanism.

Specifically, it is preferred tab attaching mechanisms are installed respectively on a transport path of the positive electrode sheet transported from the positive electrode sheet delivery mechanism to the winding mechanism through the first coating mechanism and the first heating mechanism, downstream of the positive electrode sheet delivery mechanism and upstream of the first coating mechanism, or on the transport path of the positive electrode sheet downstream of the first heating mechanism and upstream of the winding mechanism, and on a transport path of the negative electrode sheet transported from the negative electrode sheet delivery mechanism to the winding mechanism through the second coating mechanism and the second heating mechanism, downstream of the negative electrode sheet delivery mechanism and upstream of the second coating mechanism, or on the transport path of the negative electrode sheet downstream of the second heating mechanism and upstream of the winding mechanism.

With the tab attaching mechanisms installed as noted above, tabs may be formed in predetermined positions on the positive electrode sheet and negative electrode sheet. Further, products free from patches formed by the electrolyte poured, and bubbles formed in time of hardening may be manufactured efficiently and reliably, and a decrease in the processing steps allows the entire manufacturing apparatus to have a compact construction.

In the secondary battery manufacturing apparatus according to this invention, preferably, an accumulator roller is provided for storing the positive or negative electrode sheet in a predetermined amount, said accumulator roller being movable relative to an apparatus base. With the accumulator roller constructed movable relative to the apparatus base, the positive or negative electrode sheet may be stored in a predetermined amount.

In the secondary battery manufacturing apparatus according to this invention, preferably, at least one of the first heating mechanism and the second heating mechanism includes a heating box body having a heating chamber for heating, with hot wind in form of a heated gas, the electrolyte-containing solution or the electrolytic gel applied to the positive or negative electrode sheet, and two sealing chambers separated by respective partition plates from the heating chamber, a hot wind supply device for supplying the hot wind into the heating chamber, and two exhaust devices for exhausting the hot wind from the respective sealing chambers, said heating box body defining an entrance and an exit in a direction of entrance and exit of said sheet, said partition plates defining openings in the same direction. With the first heating mechanism or second heating mechanism constructed as noted above, upon operation of the two exhaust devices, ambient air is drawn in through the entrance and exit of the heating box body, and the hot wind in the heating chamber is drawn in through the openings in the partition plates to be exhausted. Thus, the hot wind in the heating chamber is prevented from flowing out through the entrance and exit of the heating box body.

### BRIEF DESCRIPTION OF THE DRAWINGS

Fig. 1 is a schematic view showing one embodiment of a construction of a lithium ion polymer battery manufacturing apparatus which is one of the secondary battery apparatus of this invention;
Fig. 2 is a schematic front view showing a construction of a lithium ion polymer battery in this embodiment; and
Fig. 3 is a schematic side view of Fig. 2.

### BEST MODE FOR CARRYING OUT THE INVENTION

The following is a mode for solving the problems of the prior art.

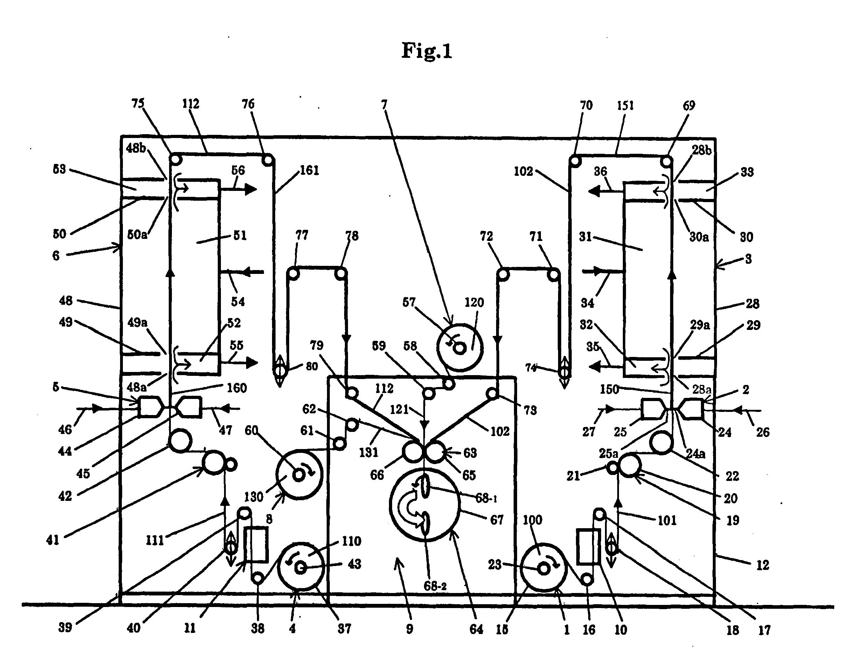

An embodiment of this invention will be described hereinafter with reference to the drawings. Fig. 1 is a schematic view showing one embodiment of a construction of a lithium ion polymer battery manufacturing apparatus which is one of the secondary battery manufacturing apparatus of this invention. The lithium ion polymer battery manufacturing apparatus includes a positive electrode sheet delivery mechanism 1, a first coating mechanism 2 for intermittently applying an electrolyte-containing solution 150 such as a gel-like object of an electrolyte or an object in form of a solution containing the electrolyte to both surfaces of a positive electrode sheet 101, a first heating mechanism 3 for heating, with hot wind, the electrolyte-containing solution 150 applied in gel form, to reduce it to a solution to permeate and to be fixed to the positive electrode sheet 101, or heating, with hot wind, the electrolyte-containing solution 150 in form of a solution with the electrolyte contained in a solvent, to evaporate the solvent and fix the electrolyte to the positive electrode sheet 101, a negative electrode sheet delivery mechanism 4, a second coating mechanism 5 for intermittently applying an electrolyte-containing solution 160 such as a gel-like object of an electrolyte or an object in form of a solution containing the electrolyte to both surfaces of a negative electrode sheet 111, a second heating mechanism 6 for heating, with hot wind, the electrolyte-containing solution 160 applied in gel form, to reduce it to a solution to permeate and to be fixed to the negative electrode sheet 111, or heating, with hot wind, the electrolyte-containing solution 160 in form of a solution with the electrolyte contained in a solvent, to evaporate the solvent and fix the electrolyte to the negative electrode sheet 111, a first separator delivery mechanism 7 and a second separator delivery mechanism 8 for feeding separators 121 and 131 for superposing, in insulated state, the positive electrode sheet 102 with electrolyte 151 fixed thereto and the negative electrode sheet 112 with electrolyte 161 fixed thereto, and a winding mechanism 9 for winding a laminate of the positive electrode sheet 102 with electrolyte 151 fixed thereto, the separator 121, the negative electrode sheet 112 with electrolyte 161 fixed thereto, and the separator 131, in a predetermined shape (e.g. a rectangular or circular sectional shape).

The electrolyte in gel form may be applied as liquefied by heating.

The above positive electrode sheet delivery mechanism 1 has a first tab attaching mechanism 10, and the negative electrode sheet delivery mechanism 4 has a second tab attaching mechanism 11. This first tab attaching mechanism 10 may be installed between the first heating mechanism 3 and the winding mechanism 9, and the second tab attaching mechanism 11 between the second heating mechanism 6 and the winding mechanism 9.

That is, as shown in Fig. 1, the first tab attaching mechanism 10 may be installed on a transport path of the positive electrode sheet transported from the positive electrode sheet delivery mechanism 1 to the winding mechanism 9 through the first coating mechanism 2 and the first heating mechanism 3, downstream of the positive electrode sheet delivery mechanism 1 and upstream of the first coating mechanism 2. The second tab attaching mechanism 11 may be installed on a transport path of the negative electrode sheet transported from the negative electrode sheet delivery mechanism 4 to the winding mechanism 9 through the second coating mechanism 5 and the second heating mechanism 6, downstream of the negative electrode sheet delivery mechanism 4 and upstream of the second coating mechanism 5.

This first tab attaching mechanism 10 may also be installed between the positive electrode sheet delivery mechanism 1 and the first coating mechanism 2, and the second tab attaching mechanism 11 between the negative electrode sheet delivery mechanism 4 and the second coating mechanism 5.

The above positive electrode sheet delivery mechanism 1 includes a positive electrode sheet supply device 15, a first guide roller 16 and a second guide roller 17 for guiding the positive electrode sheet 101 (which may be a sheet with positive electrodes formed intermittently at predetermined intervals on both surfaces thereof, or a sheet with positive electrodes formed continuously on both surfaces) drawn from a stock roll 100, a first accumulator roller 18 for storing a predetermined amount of this positive electrode sheet 101, a first feeding device 19 having a drive roller 20 and a nip roller 21 for feeding the positive electrode sheet 101 at a predetermined rate toward the first coating mechanism 2, and a positioning roller 22 for running the positive electrode sheet 101 to a coating position of the first coating mechanism 2.

The positive electrode sheet supply device 15 has one chuck shaft 23 (e.g. an air chuck mechanism with movable members such as claws pressed on an inner peripheral surface of a core by supply of compressed air to support the core) rotatably mounted through a bearing on a frame installed on an apparatus frame 12. The stock roll 100 which is also a positive electrode sheet winding roll is supported horizontally by the chuck shaft 23 extending therethrough. This chuck shaft 23 is rotatable by a motor to deliver the positive electrode sheet 101 at a predetermined rate.

This supply device 15 may have at least one core chuck of core chucks movable longitudinally of an axis. The core chucks are rotatably mounted on the frame. The stock roll 100 which is also a positive electrode sheet winding roll is supported in a horizontal state at opposite sides by the core chucks.

The first accumulator roller 18 has a roller attached to pivot arms pivotably installed on the apparatus frame 12 through a bearing, or to a slider movable substantially vertically along a guide provided on the apparatus frame 12, for storing a sufficient amount of the positive electrode sheet 101 so that the positive electrode sheet 101 lying downstream of the first tab attaching mechanism 10 may be transported continuously when the delivery of the positive electrode sheet 101 from the supply device 15 is stopped in time of operation of the first tab attaching mechanism 10.

The first feeding device 19 includes the drive roller 20 rotatable by a motor acting as a driving device and attached to the common apparatus frame 12 or separate frame through a bearing, a support (not shown) attached to be movable along a guide formed on the common apparatus frame 12 or separate frame, and the nip roller 21 rotatably attached to the support and pressed by a pressing device such as a cylinder, spring or screw shaft with a predetermined force upon the drive roller 20.

The first coating mechanism 2 includes slit die coaters 24 and 25 with discharge openings 24a and 25a opposed to each other across the positive electrode sheet 101 transported vertically, and with coating solution supply devices 26 and 27 connected thereto and each having a tank storing the electrolyte-containing solution 150, a pump for feeding the solution, a filter for removing impurities, a solenoid-operated valve for switching pipelines, a circulating pipe, and a pipe for feeding the solution.

The first heating mechanism 3 includes a heating box body 28 defining a heating chamber 31 for heating with hot wind, while the positive electrode sheet 101 runs vertically upward from below, the electrolyte-containing solution 150 applied in gel form to reduce it to a solution to permeate and to be fixed to the positive electrode sheet 101, or heating with hot wind, the electrolyte-containing solution 150 in form of a solution with the electrolyte contained in a solvent, to evaporate the solvent and fix the electrolyte to both surfaces of the positive electrode sheet 101, and sealing chambers 32 and 33 separated by partition plates 29 and 30 from the heating chamber 31 for preventing the hot wind from flowing out through an entrance 28a and an exit 28b through which the positive electrode sheet 101 moves in and out, a hot wind supply device 34 having a blowing fan, a heater for heating a gas such as heating air or gas to a predetermined temperature, and a duct for supplying the heated gas into the heating chamber 31, and exhaust devices 35 and 36 having ducts connecting exhaust fans (not shown) and the sealing chambers 32 and 33.

Nozzles may be installed in the heating chamber 31 as appropriate for blowing the hot wind to both sides of the positive electrode sheet 101.

With operation of the above exhaust device 35, ambient air is drawn in through the entrance 28a, and the hot wind in the heating chamber 31 is drawn in through an opening 29a in the partition plate 29 to be exhausted. With an operation of the exhaust device 36, ambient air is drawn in through the exit 28b. and the hot wind in the heating chamber 31 is drawn in through an opening 30a in the partition plate 30 to be exhausted. Thus, the hot wind in the heat chamber 31 is prevented from flows out through the entrance 28a and exit 28b of the heating box 28.

The negative electrode sheet delivery mechanism 4, as does the positive electrode sheet delivery mechanism 1, includes a negative electrode sheet supply device 37, an eighth guide roller 38 and a ninth guide roller 39 for guiding the negative electrode sheet 111 (which may be a sheet with negative electrodes formed intermittently at predetermined intervals on both surfaces thereof, or a sheet with negative electrodes formed continuously on both surfaces) drawn from a stock roll 110, a third accumulator roller 40 for storing a predetermined amount of this negative electrode sheet 111, a second feeding device 41 for feeding the negative electrode sheet 111 at a predetermined rate toward the second coating mechanism 5, and a positioning roller 42 for running the negative electrode sheet 111 to a coating position of the second coating mechanism 5.

The negative electrode sheet supply device 37 has a construction similar to the positive electrode sheet supply device 15, and has a chuck shaft 43 rotatably mounted through a bearing on a frame. The roll 110 supported horizontally is rotatable to deliver the negative electrode sheet 111 at a predetermined rate.

The supply device 15 of the positive electrode sheet delivery mechanism 1 and the supply device 37 of the negative electrode sheet delivery mechanism 4 may be the multi-shaft switching type, and an automatic splicing mechanism may be installed, for successively joining and delivering the positive electrode sheet 101 and the negative electrode sheet 111.

The above first guide roller 16, second guide roller 17 and positioning roller 22 are rotatably attached to the common apparatus frame 12 or separate frames through a bearing (not shown).

The third accumulator roller 40 has a construction similar to the first accumulator roller 18, for storing a sufficient amount of the negative electrode sheet 111 so that the negative electrode sheet 111 lying downstream of the second tab attaching mechanism 11 may be transported continuously when the delivery of the negative electrode sheet 111 from the supply device 37 is stopped in time of operation of the second tab attaching mechanism 11.

The second feeding device 41 has a construction similar to the first feeding device 19, for feeding the negative electrode sheet 111 toward the second coating mechanism 5.

The second coating mechanism 5 has a construction similar to the first coating mechanism 2 described above, and includes a pair of slit die coaters 44 and 45, and coating solution supply devices 46 and 47 connected to the respective slit die coaters 44 and 45 for intermittently supplying the electrolyte-containing solution 160.

The second heating mechanism 6, as does the first heating mechanism 3, includes a heating box body 48 defining a heating chamber 51 for heating with hot wind, while the negative electrode sheet 111 runs vertically upward from below, the electrolyte-containing solution 160 applied in gel form to reduce it to a solution to permeate and to be fixed to the negative electrode sheet 111, or heating with hot wind, the electrolyte-containing solution 160 in form of a solution with the electrolyte contained in a solvent, to evaporate the solvent and fix the electrolyte to both surfaces of the negative electrode sheet 111, and sealing chambers 52 and 53 separated by partition plates 49 and 50 from the heating chamber 51 for preventing the hot wind from flowing out through an entrance 48a and an exit 48b, a hot wind supply device 54 having a blowing fan, a heater for heating a gas such as heating air or gas to a predetermined temperature, and a duct for supplying the heated gas into the heating chamber 51, and exhaust devices 55 and 56 having ducts connecting exhaust fans (not shown) and the sealing chambers 52 and 53.

The first separator delivery mechanism 7 noted hereinbefore includes a reel support device 57, and guide rollers 58 and 59 for guiding the separator 121 drawn from a reel 120. The reel support device 57 has a chuck shaft (air chuck) rotatable by a motor (not shown) acting as a drive device, and rotatably mounted through a bearing on a frame installed on the apparatus frame 12. The separator winding reel 120 is supported horizontally by the chuck shaft extending therethrough.

The second separator delivery mechanism 8 is installed on the apparatus frame 12 and, as does the first separator delivery mechanism 7, includes a reel support device 60, and guide rollers 61 and 62 for guiding the separator 131 drawn from a reel 130. The reel support device 60 has a construction similar to the reel support means 57, and a chuck shaft supports the reel 130 horizontally.

The first separator delivery mechanism 7 and second separator delivery mechanism 8 may be the multi-shaft switching type, and an automatic splicing mechanism may be installed, for successively joining and delivering the separators 121 and 131.

The winding mechanism 9 includes a nip device 63 for integrally laminating the positive electrode sheet 102 with electrolyte 151 fixed thereto, the separator 121, the negative electrode sheet 112 and the separator 131, and a winding device 64 for winding the laminated positive electrode sheet 102, separator 121, negative electrode sheet 112 and separator 131 in a predetermined form.

This nip device 63 includes a drive roller 65 rotatably supported by the apparatus frame 12 through a bearing (not shown) and rotatable at a predetermined rate by a motor (not shown) acting as a drive device, a nip roller 66 rotatably attached to a movable member movable along a guide formed on the apparatus frame 12 or a guide formed on a bracket attached to the apparatus frame 12, and a pressing device such as a fluid cylinder, spring or screw shaft for moving the movable member to press the nip roller 66 upon the drive roller 65 with a predetermined force.

The winding device 64 includes a turret member 67 rotatably supported by the apparatus frame 12 and rotatable by a motor, core shafts 68 (68-1, 68-2) rotatably attached to the turret member 67, and a motor (not shown) for rotating the core shafts 68 at a predetermined rate and a predetermined number of times.

The core shafts 68 (68-1, 68-2), preferably, are arranged in at least two positions, i.e. a position for successively winding the laminate transported continuously of the positive electrode sheet 102, negative electrode sheet 112 and separator 121, 131 in a predetermined form (rectangular, square or circular sectional shape), and a position for taking out the wound product (battery). However, where output is small, only one core shaft 68 may be provided.

Adjacent the winding position of the winding device 64, a cutting device (not shown) is installed for cutting each of the positive electrode sheet 102 and negative electrode sheet 112 to a predetermined length necessary for winding, and a cutting device (not shown) for cutting the separators 121 and 131 wound. Adjacent the product takeout position, a fixing adhesive tape applying device (not shown) is installed for applying a fixing adhesive tape 190 for fixing an end of the wound laminate to an outer peripheral surface of the winding.

Between the first heating mechanism 3 and the winding mechanisms 9 are a third guide roller 69 for horizontally running the positive electrode sheet 102 fed from the first heating mechanism 3, a fourth guide roller 70 for running this positive electrode sheet 102 vertically downward, a fifth guide roller 71 for horizontally running the positive electrode sheet 102 running vertically upward, a sixth guide roller 72 for running this positive electrode sheet 102 vertically downward, and a seventh guide roller 73 for running the positive electrode sheet 102 toward the nip device 63 of the winding mechanism 9. A second accumulator roller 74 is installed between the fourth guide roller 70 and fifth guide roller 71.

This second accumulator roller 74 has a construction similar to the first accumulator roller 18, with the roller movable substantially vertically to store the positive electrode sheet 102 fed from the first heating mechanism 3 while the turret member 67 of the winding device 64 in the winding mechanism 9 rotates to move the core shaft 68-1 from the winding position to the takeout position, and the core shaft 68-2 from the takeout position to the winding position where the core shaft 68-2 starts winding action.

Between the second heating mechanism 6 and the winding mechanisms 9 are a tenth guide roller 75 for horizontally running the negative electrode sheet 112 fed from the second heating mechanism 6, an eleventh guide roller 76 for running this negative electrode sheet 112 vertically downward, a twelfth guide roller 77 for horizontally running the negative electrode sheet 112 running vertically upward, a thirteenth guide roller 78 for running this negative electrode sheet 112 vertically downward, and a fourteenth guide roller 79 for running the negative electrode sheet 112 toward the nip device 63 of the winding mechanism 9. A fourth accumulator roller 80 is installed between the eleventh guide roller 76 and twelfth guide roller 77.

This fourth accumulator roller 80 has a construction similar to the second accumulator roller 74, with the roller movable substantially vertically to store the negative electrode sheet 112 fed from the second heating mechanism 6 while the turret member 67 of the winding device 64 in the winding mechanism 9 rotates to move the core shaft 68-1 from the winding position to the takeout position, and the core shaft 68-2 from the takeout position to the winding position where the core shaft 68-2 starts winding action.

The first accumulator roller 18, second accumulator roller 74, third accumulator roller 40 and fourth accumulator roller 80 may be adapted to have rollers movable horizontally.

The first tab attaching mechanism 10 noted hereinbefore is installed between the first guide roller 16 and second guide roller 17, and includes a tab supplying reel support device for rotatably supporting a current collecting positive electrode tab 170, a device for applying or winding a protective adhesive tape to both surfaces of the positive electrode tab 170, a device for cutting the positive electrode tab 170 to a predetermined length, and an ultrasonic fusing device for fusing the positive electrode tab 170 to predetermined positions of the positive electrode sheet 101 not having positive electrodes.

The second tab attaching mechanism 11 having a construction similar to the first tab attaching mechanism 10 is installed between the eighth guide roller 38 and ninth guide roller 39, and includes a tab supplying reel support device for rotatably supporting a reel winding a protective tape having a current collecting negative electrode tab 180 applied at predetermined intervals, a device for applying or winding a protective adhesive tape to both surfaces of the negative electrode tab 180, a device for cutting the negative electrode tab 180 to a predetermined length, and an ultrasonic fusing device for fusing the negative electrode tab 170 to predetermined positions of the negative electrode sheet 111 not having negative electrodes.

Where the positive electrode sheet 101 with a positive electrode formed continuously is used, after peeling off the positive electrode from positions where the positive electrode tab 170 is to be attached, this positive electrode tab 170 is fused to the sheet. Where the negative electrode sheet 111 with a negative electrode formed continuously is used, after peeling off the negative electrode from positions where the negative electrode tab 180 is to be attached, this negative electrode tab 180 is fused to the sheet.

The above rollers such as the guide rollers and accumulator rollers are rotatably attached to the apparatus frame 12 in a cantilever state through bearings, to be rotated by movement of the sheets.

The first guide roller 16, eighth guide roller 38, guide rollers 58 and 61, sixth guide roller 72 and thirteenth guide roller 78 have at least one detecting device among a tension detecting device, a meandering amount detecting device and an electrolyte coating position detecting device. With the tension detecting device, meandering amount detecting device and electrolyte coating position detecting device installed for these guide rollers 58 and 61, sixth guide roller 72 and thirteenth guide roller 78, controls are carried out of transport speed of the positive electrode sheet 101 by the first feeding device 19, coating intervals by the first coating mechanism 2, transport speed of the negative electrode sheet 111 by the second feeding device 41, coating intervals by the second coating mechanism 5, and meandering correction, in order to secure an agreement in position between the electrolyte 151 of the positive electrode sheet 102 and the electrolyte 161 of the negative electrode sheet 112.

Delivery speed control of the above positive electrode sheet delivery mechanism 1 and negative electrode sheet delivery mechanism 4, delivery speed control and timing control of switching between delivery and stopping of the first separator delivery mechanism 7 and second separator delivery mechanism 8, rotating speed control of the nip device 63 and winding device 64 and timing control of switching to the winding device 64 in the winding mechanism 9, and coating amount and timing control of intermittent delivery of the coating solution of the first coating mechanism 2 and second coating mechanism 5, are carried out by a control device (not shown) having a set value input function, a storage function, a comparing and computing function and an operating command output function.

The above battery manufacture apparatus has the positive electrode sheet delivery mechanism 1, first coating mechanism 2, first heating mechanism 3 and first tab attaching mechanism 10 arranged at one side of the winding mechanism 9, and the negative electrode sheet delivery mechanism 4, second coating mechanism 5, second heating mechanism 6 and second tab attaching mechanism 11 arranged at the other side. The first separator delivery mechanism 7 and second separator delivery mechanism 8 may be determined appropriately according to the transport paths of the positive electrode sheet 102 and negative electrode sheet 112 running toward the nip device 63 of the winding mechanism 9.

Where lithium ion polymer batteries are manufactured by the above lithium ion polymer battery manufacturing apparatus, the roll 100 with the positive electrode sheet 101 wound thereon beforehand and the roll 110 with the negative electrode sheet 111 wound thereon are prepared. The electrolyte-containing solution 150 is stored in the coating solution supply devices 26 and 27 of the first coating mechanism 2, and the electrolyte-containing solution 160 in the coating solution supply devices 46 and 47 of the second coating mechanism 5. The electrolyte-containing solutions 150 and 160 may have the electrolyte contained in a solvent or the like. The type electrolyte, content, and type of solution are of course not limitative.

In place of the electrolyte-containing solutions 150 and 160, a 100% gel of electrolyte may be used, which may be heated into liquid for application.

The above stock roll 100 and stock roll 110 may be obtained by intermittently applying slurries such as of active materials for positive and negative electrodes, conductive material and binding material to both surfaces by slit die coaters, and then drying and fixing the slurries to collectors by passing through a heating mechanism to form the positive electrode sheet 101 and negative electrode sheet 111, which are cut to a predetermined width by a slitter, and wound into rolls.

The above positive active material for forming the positive electrode sheet, preferably, is a lithium oxide of transition metal such as lithium manganate (LiMn₂O₄), lithium cobaltate (LiCoO₂) or lithium nickelate (LiNiO₂). The negative active material for forming the negative electrode sheet, preferably, is a carbon material having lithium ion occluding ability, particularly coky carbon or graphitic carbon.

The conductive material is a known electron conducting material, preferably, natural graphite, carbon black, acetylene black or the like.

The binding material, preferably, is a solution of polytetrafluoroethylene (PTFE), polyvinylidene fluoride (PVDF) or hexafluoropropylene (HFP), or a copolymeric solution thereof.

When the roll 100 winding the above positive electrode sheet 101 and the roll 110 winding the negative electrode sheet 111 have been prepared, the roll 100 is mounted for support on the chuck shaft 23 of the supply device 15 of the positive electrode sheet delivery mechanism 1, and the roll 110 on the chuck shaft 43 of the supply device 37 of the negative electrode sheet delivery mechanism 4.

Subsequently, the reel 120 is mounted for support on the reel support device 57 of the first separator delivery mechanism, and the reel 130 on the reel support device 60 of the second separator delivery mechanism 8. The separators 121 and 131 are drawn out to be held in a predetermined position at an inlet of the nip device 63 in the winding mechanism 9.

The first tab attaching mechanism 10 is made to support the reel of the positive electrode tab 170, and the second tab attaching mechanism 11 is made to support the reel of the negative electrode tab 180. The positive electrode tab 170 and negative electrode tab 180 are made ready for fusing to the positive electrode sheet 101 and negative electrode sheet 111.

Where an untreated sheet portion for through operation is provided at each of an end (leading end) of the positive electrode sheet 101 on the stock roll 100 and an end (leading end) of the negative electrode sheet 111 on the stock roll 110, the untreated sheet portion is drawn from the stock roll 100. Where an untreated sheet portion is not formed, a lead film is applied to the end of each sheet, and is passed on the first guide roller 16, second guide roller 17, first accumulator roller 18, first feeding device 19 and positioning roller 22, then passed between the slit die coaters 24 and 25 of the first coating mechanism 2 and through the heating box body 28 of the first heating mechanism 3, and passed on the third guide roller 69, fourth guide roller 70, second accumulator roller 74, fifth guide roller 71, sixth guide roller 72 and seventh guide roller 73 to be pinched by the nip device 63 of the winding mechanism 9. Then, the untreated sheet portion is drawn from the stock roll 110, and is passed on the eighth guide roller 38, ninth guide roller 39, third accumulator roller 40, second feeding device 41 and positioning roller 42, then passed between the slit die coaters 44 and 45 of the second coating mechanism 5 and through the heating box body 48 of the second heating mechanism 6, and passed on the tenth guide roller 75, eleventh guide roller 76, fourth accumulator roller 80, twelfth guide roller 77, thirteenth guide roller 78 and fourteenth guide roller 79 to be pinched by the nip device 63 of the winding mechanism 9.

In the above operation, the first accumulator roller 18, second accumulator roller 74, third accumulator roller 40 and fourth accumulator roller 80 each store an amount of sheet needed in time of formation of lium ion polymer batteries.

In the above operation, the untreated sheet portion of the positive electrode sheet 101 and the untreated sheet portion of the negative electrode sheet 111 having been set in place are wound on the core shaft 68 in the winding position of the winding device 64 in the winding mechanism 9, and are taken up by operating the supply device 15 of the positive electrode sheet delivery mechanism 1, the supply device 37 of the negative electrode sheet delivery mechanism 4, and the nip device 63 and the winding device 64 of the winding mechanism 9.

When the positive electrode sheet 101 is transported by the first tab attaching mechanism 10 to reach a positive electrode tab attaching position set beforehand, the supply device 15 operates to stop feeding the positive electrode sheet 101. Substantially at the same time, the first tab attaching mechanism 10 operates to fuse the positive electrode tab 170 to predetermined positions of the positive electrode sheet 101.

Simultaneously with the above operation, when the negative electrode sheet 111 is transported by the second tab attaching mechanism 11 to reach a negative electrode tab attaching position set beforehand, the supply device 37 operates to stop feeding the negative electrode sheet 111. Substantially at the same time, the second tab attaching mechanism 11 operates to fuse the negative electrode tab 180 to predetermined positions of the negative electrode sheet 111.

Subsequently, when the positive electrode sheet 101 reaches the coating position of the first coating mechanism 2 and the negative electrode sheet 111 reaches the coating position of the second coating mechanism 5, the coating solution supply devices 26 and 27 of the first coating mechanism 2 operate to switch the pipelines to deliver the electrolyte-containing solution 150 from the slit die coaters 24 and 25 to be applied to the same positions as the positive electrodes formed on both sides of the positive electrode sheet 101, and the coating solution supply devices 46 and 47 of the second coating mechanism 5 operate to switch the pipelines to deliver the electrolyte-containing solution 160 from the slit die coaters 44 and 45 to be applied to the same positions as the negative electrodes formed on both sides of the negative electrode sheet 111. When the application has been made over a length set beforehand, the coating solution supply devices 26 and 27 and the coating solution supply devices 46 and 47 operate to switch the pipelines to stop delivery of the electrolyte-containing solutions 150 and 160.

When the positive electrode sheet 101 with the electrolyte-containing solution 150 applied thereto is transported to the first heating mechanism 3, the electrolyte-containing solution 150 is heated by the hot wind heated to a predetermined temperature to evaporate the solvent and fix the electrolyte 151 to both surfaces of the positive electrode sheet 101.

Simultaneously with the above operation, when the negative electrode sheet 111 with the electrolyte-containing solution 160 applied thereto is transported to the second heating mechanism 6, the electrolyte-containing solution 160 is heated by the hot wind heated to the predetermined temperature to evaporate the solvent and fix the electrolyte 161 to both surfaces of the negative electrode sheet 111.

Each of the positive electrode sheet 102 and negative electrode sheet 112 with the electrolytes 151 and 161 fixed thereto is cut by the cutting device (not shown) to the length required for winding, and transported to the nip device 63 in the winding mechanism 9. Then, the first separator delivery mechanism 7 and second separator delivery mechanism 8 operate to feed leading ends of the separators 121 and 131 held adjacent the nip device 63.

Then, the separator 121 placed between the positive electrode sheet 102 and negative electrode sheet 112 and the separator 131 placed at the rear surface of the negative electrode sheet 112, and laminated and pinched by the nip device 63 are fed to the core shaft 68-1 of the winding device 64 to be wound (held) on the core shaft 68-1.

When the core shaft 68-1 is rotated the number of times set beforehand to become a predetermined form (with a rectangular section), the turret member 67 rotates to move the core shaft 68-1 to the takeout position and move the core shaft 68-2 to the winding position. The core shaft 68-2 winds the laminate of the positive electrode sheet 102, separator 121, negative electrode sheet 112 and separator 131.

During the above switching operation, the electrolyte 151 is not fixed to the positive electrode sheet 102 located between the core shaft 68-1 and core shaft 68-2, and the electrolyte 161 is not fixed to the negative electrode sheet 112.

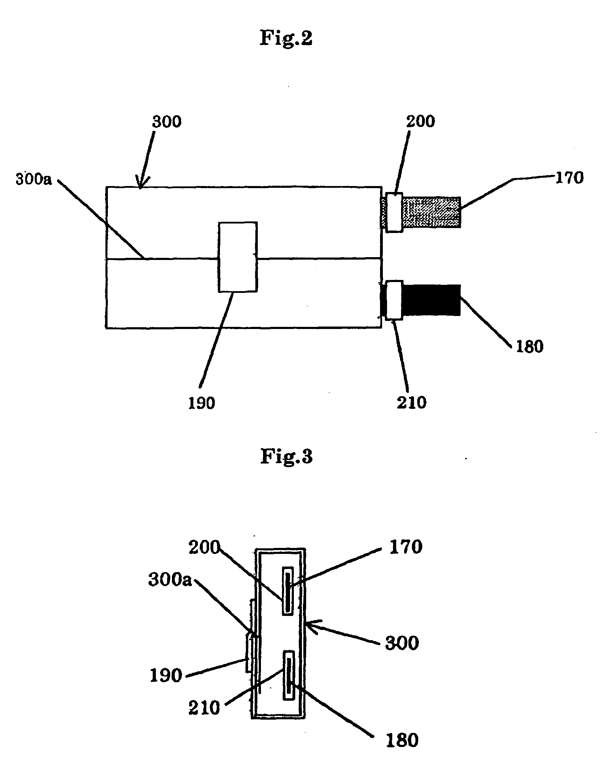

When the core shaft 68-1 moves to the takeout position in the above switching operation, the cutting device (not shown) operates to cut the separators 121 and 131. At the same time, the fixing adhesive tape applying device (not shown) operates to apply the fixing adhesive tape 190 to the outer peripheral surface and cut ends 300a of the laminate wound on the core shaft 68-1. Then, a lithium ion polymer battery 300 formed as shown in Fig. 2 and Fig. 3 is removed from the core shaft 68-1 by the operator or a doffer mechanism.

The application or winding of protective adhesive tapes 200 and 210 to the positive electrode tab 170 and negative electrode tab 180 on the above lithium ion polymer battery 300 is carried out in portions of the first tab attaching mechanism 10 and second tab attaching mechanism 11 before or after the fusion of the positive electrode tab 170 and negative electrode tab 180.

When the separators 121 and 131 are cut and the leading ends wound around the core shaft 68-2 in the above operation, the positive electrode sheet 102 and negative electrode sheet 112 cut to the predetermined length are transported, with the separator 121 located between the positive electrode sheet 102 and negative electrode sheet 112, and the separator 131 at the rear surface of the negative electrode sheet 112. A lithium ion polymer battery 300 is formed by the same operation as in the case of the core shaft 68-1.

The processing steps may be decreased drastically by continuously carrying out the above operation for intermittently coating the electrolyte-containing solution 150 on both surfaces of the positive electrode sheet 101, the operation for fixing the electrolyte 151 by heating, the operation for intermittently coating the electrolyte-containing solution 160 on both surfaces of the negative electrode sheet 111, the operation for fixing the electrolyte 161 by heating, the operation for supplying the separator 121 between the positive electrode sheet 102 and negative electrode sheet 112, the operation for supplying the separator 131 to located at the rear surface of the negative electrode sheet 112, and the switching operation and winding operation for winding and forming into the predetermined form on the core shaft 68-1 of the winding device 64, the positive electrode sheet 102, separator 121, negative electrode sheet 112 and the separator 131 laminated and pinched by the nip device 63, and switching the core shafts 68-1 and 68-2. Lithium ion polymer batteries may be manufactured efficiently without damaging the collecting tabs and with hardly any patches formed by the electrolyte poured, bubbles or the like.

The construction of the secondary battery and the construction of the secondary battery manufacturing apparatus of this invention are of course not limited to the constructions shown in Figs. 1-3.

### INDUSTRIAL UTILITY

As described above, the secondary battery manufacturing method and the secondary battery manufacturing apparatus according to this invention are suited for secondary batteries such as lithium ion polymer batteries and lithium batteries used as power supplies for cellular phones, television cameras, notebook computers and the like.

## Claims

1. A secondary battery manufacturing method **characterized by** comprising a step of delivering a positive electrode sheet, a first coating step for intermittently applying an electrolyte-containing solution or an electrolytic gel to both surfaces of the positive electrode sheet, a first heating step for heating the electrolyte-containing solution or electrolytic gel applied to both surfaces of the positive electrode sheet to fix an electrolyte thereto, a step of delivering a negative electrode sheet, a second coating step for intermittently applying an electrolyte-containing solution or an electrolytic gel to both surfaces of the negative electrode sheet, a second heating step for heating the electrolyte-containing solution or electrolytic gel applied to both surfaces of the negative electrode sheet to fix an electrolyte thereto, and a winding step for winding, into a predetermined form, the positive electrode sheet with the electrolyte fixed thereto and the negative electrode sheet with the electrolyte fixed thereto, with a separator disposed therebetween to produce an insulated state, **characterized in that** said winding step is executed such that, of two core shafts rotatably attached to a turret member rotatably supported by an apparatus base, one is in a winding position and the other in a takeout position, the core shaft located in the winding position in this state winding a laminate of said positive electrode sheet, negative electrode sheet and separator successively into a predetermined form, said turret member being rotated, when said laminate becomes the predetermined form, to move the core shaft located in the winding position to the takeout position and move the core shaft located in the takeout position to the winding position, the laminate wound on the core shaft having moved from the winding position to the takeout position being taken out, and the laminate being again wound from the core shaft having moved from the takeout position to the winding position.

2. A secondary battery manufacturing apparatus **characterized by** comprising a positive electrode sheet delivery mechanism for delivering a positive electrode sheet, a first coating mechanism for intermittently applying an electrolyte-containing solution or an electrolytic gel to both surfaces of the positive electrode sheet, a first heating mechanism for heating the electrolyte-containing solution or electrolytic gel applied to both surfaces of the positive electrode sheet to fix an electrolyte thereto, a negative electrode sheet delivery mechanism for delivering a negative electrode sheet, a second coating mechanism for intermittently applying an electrolyte-containing solution or an electrolytic gel to both surfaces of the negative electrode sheet, a second heating mechanism for heating the electrolyte-containing solution or electrolytic gel applied to both surfaces of the negative electrode sheet to fix an electrolyte thereto, a separator delivery mechanism for supplying a separator for laminating, in an insulated state, the positive electrode sheet with the electrolyte fixed thereto and the negative electrode sheet with the electrolyte fixed thereto, and a winding mechanism for winding, into a predetermined form, the positive electrode sheet with the electrolyte fixed thereto, the negative electrode sheet with the electrolyte fixed thereto and the separator in a laminated state, **characterized in that** said winding mechanism includes a turret member rotatably supported by an apparatus base, and core shafts rotatably attached to the turret member, said core shafts being installed in at least two positions including a position for winding a laminate of said positive electrode sheet, negative electrode sheet and separator successively into a predetermined form, and a position for taking out a secondary battery which is said laminate wound.

3. A secondary battery manufacturing apparatus as defined in claim 2, **characterized in that** tab attaching mechanisms are installed respectively between the positive electrode sheet delivering mechanism and the first coating mechanism or between the first heating mechanism and the winding mechanism, and between the negative electrode sheet delivery mechanism and the second coating mechanism or between the second heating mechanism and the winding mechanism

4. A secondary battery manufacturing apparatus as defined in claim 2, **characterized in that** tab attaching mechanisms are installed respectively on a transport path of the positive electrode sheet transported from the positive electrode sheet delivery mechanism to the winding mechanism through the first coating mechanism and the first heating mechanism, downstream of the positive electrode sheet delivery mechanism and upstream of the first coating mechanism, or on said transport path of the positive electrode sheet downstream of the first heating mechanism and upstream of the winding mechanism, and on a transport path of the negative electrode sheet transported from the negative electrode sheet delivery mechanism to the winding mechanism through the second coating mechanism and the second heating mechanism, downstream of the negative electrode sheet delivery mechanism and upstream of the second coating mechanism, or on said transport path of the negative electrode sheet downstream of the second heating mechanism and upstream of the winding mechanism

5. A secondary battery manufacturing apparatus as defined in claim 2, **characterized by** comprising an accumulator roller for storing the positive or negative electrode sheet in a predetermined amount, said accumulator roller being movable relative to an apparatus base.

6. A secondary battery manufacturing apparatus as defined in claim 2, **characterized in that** at least one of the first heating mechanism and the second heating mechanism includes a heating box body having a heating chamber for heating, with hot wind in form of a heated gas, the electrolyte-containing solution or the electrolytic gel applied to the positive or negative electrode sheet, and two sealing chambers separated by respective partition plates from the heating chamber, a hot wind supply device for supplying the hot wind into the heating chamber, and two exhaust devices for exhausting the hot wind from the respective sealing chambers, said heating box body defining an entrance and an exit in a direction of entrance and exit of said sheet, said partition plates defining openings in the same direction.

7. A secondary battery manufacturing apparatus as defined in claim 2, **characterized in that** said winding mechanism includes a turret member rotatably supported by an apparatus base, and a core shaft rotatably attached to the turret member, said core shaft being installed in one position.

## Patentansprüche

1. Verfahren zur Herstellung einer Sekundärbatterie, **dadurch gekennzeichnet dass** es umfasst einen Schritt des Austragens einer positiven Elektrodenfolie, einen ersten Beschichtungsschritt zum diskontinuierlichen Aufbringen einer Elektrolyt-haltigen Lösung oder eines Elektrolytgels auf beide Oberflächen der positiven Elektrodenfolie, einen ersten Erwärmungsschritt zum Erwärmen der auf beide Oberflächen der positiven Elektrodenfolie aufgebrachten Elektrolyt-haltigen Lösung oder des Elektrolytgels, um einen Elektrolyten darauf zu fixieren, einen Schritt des Austragens einer negativen Elektrodenfolie, einen zweiten Beschichtungsschritt zum diskontinuierlichen Aufbringen einer Elektrolyt-haltigen Lösung oder eines Elektrolytgels auf beide Oberflächen der negativen Elektrodenfolie, einen zweiten Erwärmungsschritt zum Erwärmen der auf beide Oberflächen der negativen Elektrodenfolie aufgebrachten Elektrolyt-haltigen Lösung oder des Elektrolytgels, um einen Elektrolyten darauf zu fixieren, und einen Aufwickelschritt zum Aufwickeln der positiven Elektrodenfolie mit dem darauf fixierten Elektrolyten und der negativen Elektrodenfolie mit dem darauf fixierten Elektrolyten zu einer vorbestimmten Form, wobei ein Separator zwischen diesen angeordnet ist, um einen isolierten Zustand herzustellen, **dadurch gekennzeichnet, dass** der Aufwickelschritt so ausgeführt wird, dass von zwei an einem drehbar von einer Vorrichtungsbasis getragenen Revolverelement drehbar angebrachten Spulenkernwellen eine in einer Aufwickelstellung und die andere in einer Herausnehmstellung ist, wobei die in der Aufwickelstellung befindliche Spulenkemwelle in diesem Zustand ein Laminat aus der positiven Elektrodenfolie, der negativen Elektrodenfolie und dem Separator nacheinander zu einer vorbestimmten Form wickelt, wobei das Revolverelement gedreht wird, wenn das Laminat zu der vorbestimmten Form geworden ist, um die in der Aufwickelstellung befindliche Spulenkernwelle zu der Herausnehmstellung zu bewegen und die in der Herausnehmstellung befindliche Spulenkemwelle zu der Aufwickelstellung zu bewegen, wobei das auf die von der Aufwickelstellung zu der Herausnehmstellung bewegte Spulenkemwelle aufgewickelte Laminat herausgenommen wird und durch die von der Herausnehmstellung zu der Aufwickelstellung bewegte Spulenkemwelle wieder das Laminat aufgewickelt wird.

2. Einrichtung zur Herstellung einer Sekundärbatterie, **dadurch gekennzeichnet dass** sie umfasst einen Mechanismus zum Austragen einer positiven Elektrodenfolie, einen ersten Beschichtungsmechanismus zum diskontinuierlichen Aufbringen einer Elektrolyt-haltigen Lösung oder eines Elektrolytgels auf beide Oberflächen der positiven Elektrodenfolie, einen ersten Erwärmungsmechanismus zum Erwärmen der auf beide Oberflächen der positiven Elektrodenfolie aufgebrachten Elektrolyt-haltigen Lösung oder des Elektrolytgels, um einen Elektrolyten darauf zu fixieren, einen Mechanismus zum Bereistellen einer negativen Elektrodenfolie, einen zweiten Beschichtungsmechanismus zum diskontinuierlichen Aufbringen einer Elektrolyt-haltigen Lösung oder eines Elektrolytgels auf beide Oberflächen der negativen Elektrodenfolie, einen zweiten Erwärmungsmechanismus zum Erwärmen der auf beide Oberflächen der negativen Elektrodenfolie aufgebrachten Elektrolyt-haltigen Lösung oder des Elektrolytgels, um einen Elektrolyten darauf zu fixieren, einen Mechanismus zum Austragen eines Separators für die Zufuhr eines Separators zum Darauflaminieren der positiven Elektrodenfolie mit dem darauf fixierten Elektrolyten und der negativen Elektrodenfolie mit dem darauf fixierten Elektrolyten in einem isolierten Zustand, und einen Aufwickelmechanismus zum Aufwickeln der positiven Elektrodenfolie mit dem darauf fixierten Elektrolyten, der negativen Elektrodenfolie mit dem darauf fixierten Elektrolyten und des Separators in einem laminierten Zustand zu einer vorbestimmten Form, **dadurch gekennzeichnet dass** der Aufwickelmechanismus ein von einer Vorrichtungsbasis getragenes Revolverelement und drehbar an dem Revolverelement angebrachte Spulenkemwellen beinhaltet, wobei die Spulenkemwellen in mindestens zwei Stellungen installiert sind, beinhaltend eine Stellung zum Aufwickeln eines Laminates aus der positiven Elektrodenfolie, der negativen Elektrodenfolie und dem Separator nacheinander zu einer vorbestimmten Form, und eine Stellung zum Herausnehmen einer Sekundärbatterie, welche das aufgewickelte Laminat ist.

3. Einrichtung zur Herstellung einer Sekundärbatterie gemäß Anspruch 2, **dadurch gekennzeichnet dass** Mechanismen zur Anbringung von Kontaktfahnen zwischen dem Mechanismus zum Austragen einer positiven Elektrodenfolie und dem ersten Beschichtungsmechanismus oder zwischen dem ersten Erwärmungsmechanismus und dem Aufwickelmechanismus, beziehungsweise zwischen dem Mechanismus zum Austragen einer negativen Elektrodenfolie und dem zweiten Beschichtungsmechanismus oder zwischen dem zweiten Erwärmungsmechanismus und dem Aufwickelmechanismus installiert sind.

4. Einrichtung zur Herstellung einer Sekundärbatterie gemäß Anspruch 2, **dadurch gekennzeichnet dass** Mechanismen zur Anbringung von Kontaktfahnen installiert sind auf dem Transportweg der positiven Elektrodenfolie, die von dem Mechanismus zum Austragen einer positiven Elektrodenfolie über den ersten Beschichtungsmechanismus und den ersten Erwärmungsmechanismus zu dem Aufwickelmechanismus transportiert wird, nachgeschaltet dem Mechanismus zum Austragen einer positiven Elektrodenfolie und vorgeschaltet dem ersten Beschichtungsmechanismus, oder auf diesem Transportweg der positiven Elektrodenfolie nachgeschaltet dem ersten Erwärmungsmechanismus und vorgeschaltet dem Aufwickelmechanismus, beziehungsweise auf dem Transportweg der negativen Elektrodenfolie, die von dem Mechanismus zum Austragen einer negativen Elektrodenfolie über den zweiten Beschichtungsmechanismus und den zweiten Erwärmungsmechanismus zu dem Aufwickelmechanismus transportiert wird, nachgeschaltet dem Mechanismus zum Austragen einer negativen Elektrodenfolie und vorgeschaltet dem zweiten Beschichtungsmechanismus, oder auf diesem Transportweg der negativen Elektrodenfolie nachgeschaltet dem zweiten Erwärmungsmechanismus und vorgeschaltet dem Aufwickelmechanismus.

5. Einrichtung zur Herstellung einer Sekundärbatterie gemäß Anspruch 2, **dadurch gekennzeichnet dass** sie eine Sammlerwalze zum Aufbewahren der positiven oder negativen Elektrodenfolie in einer vorbestimmten Menge umfasst, wobei die Sammlerwalze in Bezug auf die Vorrichtungsbasis beweglich ist.

6. Einrichtung zur Herstellung einer Sekundärbatterie gemäß Anspruch 2, **dadurch gekennzeichnet dass** mindestens einer aus dem ersten Erwärmungsmechanismus und dem zweiten Erwärmungsmechanismus einen Erwärmungskastenkörper mit einer Erwärmungskammer zum Erwärmen der Elektrolyt-haltigen Lösung oder des Elektrolytgels, die/das auf die positive oder negative Elektrodenfolie aufgebracht ist, mit warmem Gebläsewind in Form eines erwärmten Gases, und zwei jeweils durch Trennwandbleche von der Erwärmungskammer getrennte Nachverdichtungskammern, eine Zufuhrvorrichtung zur Zufuhr des warmen Gebläsewindes in die Erwärmungskammer, und zwei Auslassvorrichtungen zum Herauslassen des warmen Gebläsewindes aus den jeweiligen Nachverdichtungskammern beinhaltet, wobei der Erwärmungskastenkörper einen Eintritt und einen Austritt in der Richtung des Eintritts und Austritts der Folie definiert, und die Trennwandbleche Öffnungen in der gleichen Richtung definieren.

7. Einrichtung zur Herstellung einer Sekundärbatterie gemäß Anspruch 2, **dadurch gekennzeichnet dass** der Aufwickelmechanismus ein drehbar von einer Vorrichtungsbasis getragenes Revolverelement und eine drehbar an dem Revolverelement befestigte Spulenkernwelle beinhaltet, wobei die Spulenkernwelle in einer Stellung installiert ist.

## Revendications

1. Procédé de fabrication d'une batterie secondaire, **caractérisé en ce qu'**il comporte une étape de délivrer une feuille d'électrode positive, une première étape de revêtement pour appliquer de façon intermittente une solution comprenant un électrolyte ou un gel électrolytique à tous les deux surfaces de la feuille d'électrode positive, une première étape de chauffage pour échauffer la solution comprenant un électrolyte ou le gel électrolytique appliqué(e) à tous les deux surfaces de la feuille d'électrode positive pour fixer un électrolyte ci-dessus, une étape de délivrer une feuille d'électrode négative, une deuxième étape de revêtement pour appliquer de façon intermittente une solution comprenant un électrolyte ou un gel électrolytique à tous les deux surfaces de la feuille d'électrode négative, une deuxième étape de chauffage pour échauffer la solution comprenant un électrolyte ou le gel électrolytique appliqué(e) à tous les deux surfaces de la feuille d'électrode négative pour fixer un électrolyte ci-dessus, et une étape d'enroulement pour enrouler en une forme prédéterminée la feuille d'électrode positive avec l'électrolyte fixé ci-dessus et la feuille d'électrode négative avec l'électrolyte fixé ci-dessus, un séparateur étant disposé entre ceux-ci afin de produire un état isolé, **caractérisé en ce que** cette étape d'enroulement est exécutée tellement que de deux mandrins, montés de façon tournante à un élément de tourelle qui est porté de façon tournante par une base de dispositif, l'un est dans une position d'enroulement et l'autre dans une position d'enlèvement, le mandrin, situé dans la position d'enroulement dans cette situation, enroule une feuille stratifiée de ladite feuille d'électrode positive, feuille d'électrode négative et du séparateur successivement en une forme déterminée à l'avance, l'élément de tourelle étant tourné quand ladite feuille stratifiée a achevé la forme déterminée à l'avance, pour déplacer à la position d'enlèvement le mandrin situé dans la position d'enroulement, et pour déplacer à la position d'enroulement le mandrin situé dans la position d'enlèvement, la feuille stratifiée qui est enroulée sur le mandrin qui était déplacé de la position d'enroulement à la position d'enlèvement étant enlevée, et la feuille stratifiée étant de nouveau enroulée par le mandrin qui était déplacé de la position d'enlèvement à la position d'enroulement.

2. Dispositif de fabrication d'une batterie secondaire, **caractérisé en ce qu'**il comporte un mécanisme de livraison d'une feuille d'électrode positive pour délivrer une feuille d'électrode positive, un premier mécanisme de revêtement pour appliquer de façon intermittente une solution comprenant un électrolyte ou un gel électrolytique à tous les deux surfaces de la feuille d'électrode positive, une premier mécanisme de chauffage pour échauffer la solution comprenant un électrolyte ou le gel électrolytique appliqué(e) à tous les deux surfaces de la feuille d'électrode positive pour fixer un électrolyte ci-dessus, un mécanisme de livraison d'une feuille d'électrode négative pour délivrer une feuille d'électrode négative, un deuxième mécanisme de revêtement pour appliquer de façon intermittente une solution comprenant un électrolyte ou un gel électrolytique à tous les deux surfaces de la feuille d'électrode négative, un deuxième mécanisme de chauffage pour échauffer la solution comprenant un électrolyte ou le gel électrolytique appliqué(e) à tous les deux surfaces de la feuille d'électrode négative pour fixer un électrolyte ci-dessus, un mécanisme de livraison d'un séparateur pour fournir un séparateur afin de stratifier la feuille d'électrode positive avec l'électrolyte fixé ci-dessus et la feuille d'électrode négative avec l'électrolyte fixé ci-dessus sur cela dans un état isolé, et un mécanisme d'enroulement pour enrouler en une forme prédéterminée la feuille d'électrode positive avec l'électrolyte fixé ci-dessus et la feuille d'électrode négative avec l'électrolyte fixé ci-dessus et le séparateur dans un état stratifié, **caractérisé en ce que** ledit mécanisme d'enroulement inclut un élément de tourelle qui est porté de façon tournante par une base de dispositif, et des mandrins, montés de façon tournante sur l'élément de tourelle, lesdits mandrins étant installés dans au moins deux positions, incluant une position pour enrouler une feuille stratifiée de ladite feuille d'électrode positive, de ladite feuille d'électrode négative et du séparateur successivement en une forme déterminée à l'avance, et une position pour enlever une batterie secondaire qui est ladite feuille stratifiée enroulée.

3. Dispositif de fabrication d'une batterie secondaire selon la revendication 2, **caractérisé en ce que** des mécanismes pour la fixation de languettes sont installés respectivement entre le mécanisme de livraison d'une feuille d'électrode positive et le premier mécanisme de revêtement ou entre le premier mécanisme de chauffage et le mécanisme d'enroulement, et entre le mécanisme de livraison d'une feuille d'électrode négative et le deuxième mécanisme de revêtement ou entre le deuxième mécanisme de chauffage et le mécanisme d'enroulement.

4. Dispositif de fabrication d'une batterie secondaire selon la revendication 2, **caractérisé en ce que** des mécanismes pour la fixation de languettes sont installés respectivement dans un chemin de transportation de la feuille d'électrode positive, transportée au mécanisme d'enroulement à partir du mécanisme de livraison d'une feuille d'électrode positive en traversant le premier mécanisme de revêtement et le premier mécanisme de chauffage, en aval du mécanisme de livraison d'une feuille d'électrode positive et en amont du premier mécanisme de revêtement, ou dans ledit chemin de transportation de la feuille d'électrode positive en aval du premier mécanisme de chauffage et en amont du mécanisme d'enroulement, et dans un chemin de transportation de la feuille d'électrode négative, transportée au mécanisme d'enroulement à partir du mécanisme de livraison d'une feuille d'électrode négative en traversant le deuxième mécanisme de revêtement et le deuxième mécanisme de chauffage, en aval du mécanisme de livraison d'une feuille d'électrode négative et en amont du deuxième mécanisme de revêtement, ou dans ledit chemin de transportation de la feuille d'électrode négative en aval du deuxième mécanisme de chauffage et en amont du mécanisme d'enroulement.

5. Dispositif de fabrication d'une batterie secondaire selon la revendication 2, **caractérisé en ce qu'**il comporte une bobine de stockage pour stocker la feuille d'électrode positive ou négative dans une quantité déterminée en avance, ladite bobine de stockage étant mobile par rapport à une base de dispositif.

6. Dispositif de fabrication d'une batterie secondaire selon la revendication 2, **caractérisé en ce que** au moins un du premier mécanisme de chauffage et du deuxième mécanisme de chauffage inclut un corps de boîte de chauffage ayant une chambre de chauffage pour échauffer avec du vent de soufflage chaud en forme d'un gaz échauffé la solution comprenant un électrolyte ou le gel électrolytique appliqué à la feuille d'électrode positive ou négative, et deux chambres de scellement séparées de la chambre de chauffage par des plaques de séparation respectives, un appareil d'approvisionnement de vent de soufflage chaud pour approvisionner le vent de soufflage chaud à la chambre de chauffage et deux appareils d'échappement pour faire échapper le vent de soufflage chaud des chambres de scellement respectives, ledit corps de boîte de chauffage définissant une entrée et une sortie dans une direction d'entrée et de sortie de ladite feuille, lesdits plaques de séparation définissant des ouvertures dans la même direction.

7. Dispositif de fabrication d'une batterie secondaire selon la revendication 2, **caractérisé en ce que** ledit mécanisme d'enroulement inclut un élément de tourelle qui est porté de façon tournante par une base de dispositif, et un mandrin, monté de façon tournante sur l'élément de tourelle, ledit mandrin étant installé dans une position.
